# EUROPÄISCHE PATENTSCHRIFT

(11) **EP 2 503 225 B1**
(45) Veröffentlichungstag und Bekanntmachung des Hinweises auf die Patenterteilung: **26.07.2017**
(21) Anmeldenummer: 12155335.8
(22) Anmeldetag: 14.02.2012
(51) Int. Cl.: F21S 8/12, B60Q 1/20, B60Q 1/12, F21Y 115/10

(54) **Kraftfahrzeugbeleuchtungseinrichtung und Kraftfahrzeugscheinwerfer mit einer solchen Beleuchtungseinrichtung**
Motor vehicle lighting device and motor vehicle headlamp with such a lighting device
Dispositif d'éclairage de véhicule automobile et phare de véhicule automobile doté d'un tel dispositif d'éclairage

(30) Priorität: 24.03.2011 DE 102011006073
(43) Veröffentlichungstag der Anmeldung: 26.09.2012
(73) Patentinhaber: Automotive Lighting Reutlingen GmbH, 72762 Reutlingen (DE)
(72) Erfinder: Fröhlich, Heike, 72762 Reutlingen (DE)
(74) Vertreter: DREISS Patentanwälte PartG mbB

(56) Entgegenhaltungen:
- EP-A1- 1 970 618
- EP-A1- 2 045 514
- EP-A1- 2 275 734
- DE-A1-102004 038 065
- DE-A1-102005 020 304
- DE-A1-102009 008 167
- JP-A- 2009 163 921
- US-A1- 2009 251 916

## Beschreibung

Die vorliegende Erfindung betrifft eine Kraftfahrzeugbeleuchtungseinrichtung umfassend mehrere nebeneinander angeordnete Lichtmodule. Jedes Lichtmodul weist mindestens eine Halbleiterlichtquelle und mindestens eine, der mindestens einen Halbleiterlichtquelle funktional zugeordnete Reflexionsfläche auf. Die mindestens eine Halbleiterlichtquelle sendet Licht in eine Hauptabstrahlrichtung aus. Die Reflexionsfläche ist derart schräg zu der Hauptabstrahlrichtung der mindestens einen Lichtquelle ausgerichtet, dass ein Großteil des von der mindestens einen Halbleiterlichtquelle ausgesandten Lichts auf die mindestens eine Reflexionsfläche trifft und dass das an der mindestens einen Reflexionsfläche reflektierte Licht eine Hauptaustrittsrichtung aufweist, die in einem Winkel zwischen 60° und 90° zu der Hauptabstrahlrichtung des von der mindestens einen Halbleiterlichtquelle ausgesandten Lichts verläuft. Jedes der Lichtmodule erzeugt eine Teillichtverteilung, wobei alle Teillichtverteilungen unterhalb einer geraden, horizontalen Helldunkelgrenze liegen und sich eine Gesamtlichtverteilung der Beleuchtungseinrichtung durch eine Überlagerung der verschiedenen Teillichtverteilungen ergibt. Die Erfindung betrifft außerdem einen Kraftfahrzeugscheinwerfer umfassend ein Gehäuse und mindestens ein darin angeordnetes Lichtmodul zur Erzeugung einer Scheinwerferfunktion.

Beleuchtungseinrichtungen für Kraftfahrzeuge der genannten Art sind beispielsweise aus der EP 2 045 514 A1 bekannt. Die dort vorgeschlagene Beleuchtungseinrichtung nutzt Halbleiterlichtquellen, insbesondere Leuchtdioden (LEDs) als Lichtquellen und ist in ihrer Gesamtheit relativ kompakt aufgebaut. Nachteilig bei der bekannten Beleuchtungseinrichtung ist allerdings, dass die durch diese erzeugte Gesamtlichtverteilung die strengen, neueren gesetzlichen Anforderungen und Vorgaben an die resultierende Gesamtlichtverteilung der Beleuchtungseinrichtung, beispielsweise die ECE-Regelung 19 F3 für Nebelscheinwerfer, nicht oder nur unzureichend erfüllen kann. Eine gattungsgemäße Kraftfahrzeugbeleuchtungseinrichtung ist aus EP 1 970 618 A1 bekannt. Nebelscheinwerfer werden heute üblicherweise separat vom übrigen Kraftfahrzeugscheinwerfer, zum Beispiel in einem Stoßfänger eines Fahrzeugs, angebracht. Sie haben eine kompakte Bauform mit meist runder oder leicht ovaler Form und besitzen als Lichtquelle in der Regel eine Halogenlampe. Der Trend geht zu Lichtquellen mit niedrigerem Energieverbrauch, so dass der Einsatz von Halbleiterlichtquellen, insbesondere von Leuchtdioden (LEDs) in Nebelscheinwerfern, wie er beispielsweise aus der genannten EP 2 045 514 A1 bekannt ist, in Zukunft zunehmen wird. Zusätzlich gibt es neue gesetzliche Rahmenbedingungen für die Nebellichtverteilung (ECE-R19 F3) mit erhöhten lichttechnischen Anforderungen, die ab Mitte 2011 in Kraft treten werden. Sowohl hinsichtlich dieser kommenden gesetzlichen Vorschriften als auch im Hinblick auf stilistische Wünsche der Fahrzeughersteller besteht auf Grundlage der bekannten Standard-Nebelscheinwerfer kaum noch Spielraum für kreative Weiterentwicklungen.

Die voraussichtlich ab Juli 2011 in Kraft tretende ECE-Regelung 19 F3 für Nebelscheinwerfer fordert eine schärfere Helldunkelgrenze, höhere Beleuchtungsstärken innerhalb der Lichtverteilung bei gleichzeitig deutlich verringerten Maximalwerten oberhalb der Helldunkelgrenze, sowie eine Begrenzung der Helligkeit im Bereich vor dem Fahrzeug, dem sogenannten Vorfeld. Derzeit bekannte Nebelscheinwerfer erfüllen diese deutlich höheren Anforderungen nicht, da es sich nicht lediglich um geringfügige Änderungen einzelner Messpunkte handelt, sondern um eine grundlegend neue Lichtphilosophie.

Im Hinblick auf die strengeren lichttechnischen Anforderungen und bei gleichzeitig wachsender Nachfrage der Fahrzeughersteller nach individuelleren und unkonventionelleren Formen, Abmessungen und Designs soll mit der vorliegenden Erfindung eine neuartige, modular aufgebaute Beleuchtungseinrichtung mit Halbleiterlichtquellen vorgeschlagen werden.

Zur Lösung dieser Aufgabe wird ausgehend von der eingangs genannten Kraftfahrzeugbeleuchtungseinrichtung vorgeschlagen, dass die Lichtmodule der Beleuchtungseinrichtung entlang einer Achse nebeneinander angeordnet sind, wobei die Lichtmodule bezüglich einer senkrecht zu der Achse verlaufenden Symmetrieebene symmetrisch angeordnet und/oder ausgebildet sind und dass die Beleuchtungseinrichtung eine ungerade Anzahl größer eins an Lichtmodulen aufweist, wobei die Lichtmodule der Beleuchtungseinrichtung entlang einer Achse nebeneinander angeordnet sind und ein zentrales Lichtmodul eine in ihren Abmessungen gegenüber der Gesamtlichtverteilung beschränkte Teillichtverteilung mit der höchsten maximalen Intensität aller Teillichtverteilungen erzeugt. Der Einsatz von Halbleiterlichtquellen in der erfindungsgemäßen Beleuchtungseinrichtung ermöglicht eine große Flexibilität hinsichtlich stilistischer Aspekte und bietet lichttechnisch großen Spielraum bei der Auslegung sowohl der Teillichtverteilungen der einzelnen Lichtmodule als auch der Gesamtlichtverteilung der Beleuchtungseinrichtung. Die erfindungsgemäße Beleuchtungseinrichtung erzeugt vorzugsweise eine als Nebellichtverteilung ausgebildete Gesamtlichtverteilung, wobei die Nebellichtverteilung die strengen Anforderungen der ECE-Regelung 19 F3 für Nebelscheinwerfer erfüllt, die voraussichtlich ab Juli 2011 in Kraft treten wird. Dabei wird die Nebellichtverteilung durch eine Überlagerung der von den einzelnen Lichtmodulen erzeugten Teillichtverteilungen gebildet.

Einzelne oder mehrere Lichtmodule können auch zur Erzeugung einer Basislichtverteilung für Abblendlicht eingesetzt werden. Die Basislichtverteilung eines Abblendlichts weist eine homogene, breitgestreute Lichtverteilung mit gerader, horizontaler Helldunkelgrenze auf. Durch Überlagerung der Basislichtverteilung mit einer Spotlichtverteilung, die eine deutlich geringere Streuung als die Basislichtverteilung und eine asymmetrische Helldunkelgrenze aufweist, ergibt sich eine resultierende Abblendlichtverteilung mit asymmetrischer Helldunkelgrenze. Das bedeutet, dass der obere Rand der Spotlichtverteilung, zumindest in einem zentralen Bereich der Lichtverteilung (zum Beispiel im Bereich eines Schnittpunkts einer Horizontalen und einer Vertikalen auf einem in einem bestimmten Abstand zu der Beleuchtungseinrichtung angeordneten Messschirm) die asymmetrische Helldunkelgrenze der Abblendlichtverteilung definiert.

Die Reflektorflächen der einzelnen Lichtmodule sind vorzugsweise separat voneinander ausgestaltet, so dass sich mehrere voneinander unabhängige Lichtmodule ergeben.

Dadurch ist eine beliebige Kombination einzelner Lichtmodule mit unterschiedlichen oder gleichen optischen Eigenschaften zu der erfindungsgemäßen Beleuchtungseinrichtung zur Erzielung einer gewünschten Gesamtlichtverteilung möglich. Zudem können die Einzelmodule beliebig relativ zueinander positioniert und ausgerichtet werden. Durch die Verwendung von Einzelmodulen mit Halbleiterlichtquellen, die geschickt miteinander kombiniert und relativ zueinander positioniert werden, ergibt sich ein sehr hohes Maß an Flexibilität der erfindungsgemäßen Beleuchtungseinrichtung:
- Aufgrund der geringen Abmessungen der einzelnen Lichtmodule können durch mehrere nebeneinander angeordnete Lichtmodule Beleuchtungseinrichtungen mit flacher, breiter Bauform realisiert werden, die sich sowohl in einem Stoßfänger als auch in einem Hauptscheinwerfer gut und flexibel integrieren lassen.
- Die Position der Halbleiterlichtquellen oberhalb eines halbschalenartig geformten Reflektors ermöglicht eine gute Nutzung des abgestrahlten Lichts mit hohem Wirkungsgrad.
- Der modulare Aufbau des Gesamtsystems bietet einen hohen Synergieeffekt, da lediglich einige wenige Standard-Lichtmodule zur Erzeugung unterschiedlicher Teillichtverteilungen vorgehalten werden müssen und diese Lichtmodule durch geeignete Kombination zur Erzeugung einer nahezu beliebigen Gesamtlichtverteilung der Beleuchtungseinrichtung zusammengesetzt werden können, so dass eine Überlagerung der Teillichtverteilungen die gewünschte resultierende Gesamtlichtverteilung der Beleuchtungseinrichtung ergibt. Die einzelnen Lichtmodul-Typen können immer wieder verwendet und neu miteinander kombiniert und relativ zueinander positioniert und ausgerichtet werden, um gewünschte Gesamtlichtverteilungen zu erzielen oder zu variieren.
- Die Teillichtverteilungen der Einzelmodule werden vorzugsweise so aufeinander abgestimmt, dass die Intensität der Gesamtlichtverteilung in den Randbereichen harmonisch abnimmt. So können verschiedene Lichtmodule, die eine unterschiedliche Lichtverteilungscharakteristik haben, einfach miteinander kombiniert werden. Es entstehen keine störenden Kanten (Hell-Dunkel-Übergänge) oder Reflexe (lokale Intensitätsmaxima) in der resultierenden Gesamtlichtverteilung. Dies ist deshalb von besonderer Bedeutung, da bereits durch geringe Reflexe, die in den Bereich oberhalb der Helldunkelgrenze gelangen können, die strengen Anforderungen der ECE-R19 F3 hinsichtlich der zulässigen Maximalwerte oberhalb der Helldunkelgrenze nicht mehr erfüllt werden könnten.
- Aufbauend auf einer gesetzeskonformen Grundlichtverteilung können mit der erfindungsgemäßen Beleuchtungseinrichtung auch spezielle Wünsche der Fahrzeughersteller an die resultierende Gesamtlichtverteilung individuell berücksichtigt werden. So kann zum Beispiel eine Beleuchtungseinrichtung zur Erzeugung eines Nebelscheinwerfer-Grundlichts einseitig seitlich um eines oder mehrere Lichtmodule zur Erzielung einer Kurvenlichtverteilung oder eines Teils davon ergänzt werden, die beim Durchfahren einer Kurve gleichzeitig oder sukzessive mit zunehmendem Kurvenradius aktiviert werden und die Kurveninnenseite ausleuchten.
- Schließlich ermöglicht der modulare Aufbau der erfindungsgemäßen Beleuchtungseinrichtung auch eine einfache und flexible Anpassung der Form und Abmessungen der Beleuchtungseinrichtung an den in einem Fahrzeug oder einem Scheinwerfergehäuse zur Verfügung stehenden Bauraum.

Die Halbleiterlichtquellen können als einzelne LEDs oder als LED-Arrays ausgebildet sein. Die Reflexionsflächen sind Teil eines Reflektorelements. Eine Reflexionsfläche kann zwei bspw. in einem Winkel zueinander stehende Teilreflexionsflächen aufweisen. Das lichttechnische System der erfindungsgemäßen Beleuchtungseinrichtung besteht aus mehreren einzelnen Reflektorelementen und einer diesen jeweils zugeordneten Halbleiterlichtquelle. Die Anzahl der Halbleiterlichtquellen ist vorzugsweise entweder gleich der Anzahl der Reflektorelemente oder, wenn eine Lichtquelle mehreren Reflektorelementen zugeordnet ist, kleiner als die Anzahl der Reflektorelemente. Die erforderliche Anzahl an Halbleiterlichtquellen ist abhängig von der Größe des gesamten lichttechnischen Systems, von dem verwendeten Halbleiterlichtquellentyp und von der gewünschten Charakteristik, insbesondere der Lichtintensität, der resultierenden Gesamtlichtverteilung.

Gemäß einer vorteilhaften Weiterbildung der Erfindung wird vorgeschlagen, dass die zumindest einem der Lichtmodule zugeordnete mindestens eine Halbleiterlichtquelle ausgehend von einer in etwa horizontalen Anordnung um eine im Wesentlichen horizontal und im Wesentlichen senkrecht zu der Hauptaustrittsrichtung des reflektierten Lichts verlaufende Achse zu der Reflexionsfläche des Lichtmoduls hin verkippt ist, so dass die Hauptabstrahlrichtung der Lichtquelle weiter oberhalb auf die Reflexionsfläche trifft als wenn die Lichtquelle horizontal angeordnet wäre. Bei einer horizontalen Ausrichtung der mindestens einen Halbleiterlichtquelle erstreckt sich eine Licht emittierende Fläche der Lichtquelle in einer im Wesentlichen horizontalen Ebene, wobei die Hauptabstrahlrichtung der Lichtquelle im Wesentlichen nach unten gerichtet ist. Während bei der horizontalen Ausrichtung der mindestens einen Lichtquelle ein Teil des von der Lichtquelle ausgesandten Lichts verloren geht, da es nicht auf die Reflexionsfläche trifft, und ein Teil der Reflexionsfläche ungenutzt bleibt, da auf diesen Teil keine von der Lichtquelle ausgesandten Lichtstrahlen auftreffen, ist dies bei einer um die horizontale Achse gedrehten Lichtquelle anders. Dabei trifft auch der Teil des von der Lichtquelle ausgesandten Lichts größtenteils auf die Reflexionsfläche und ist der ungenutzte Bereich der Reflexionsfläche viel kleiner als bei einer horizontal ausgerichteten Lichtquelle. Insgesamt weist das Lichtmodul gemäß dieser Weiterbildung einen deutlich verbesserten Wirkungsgrad auf. Die Beleuchtungseinrichtung weist mehrere nebeneinander angeordnete Lichtmodule auf. Selbstverständlich ist auch eine Anordnung der Lichtmodule übereinander oder in beliebiger Weise schräg versetzt zueinander denkbar.

Gemäß der Erfindung ist die Beleuchtungseinrichtung mit horizontal nebeneinander angeordneten Lichtmodulen symmetrisch zu einer vertikalen Symmetrieebene aufgebaut, d.h. jeweils die in demselben Abstand zur Symmetrieebene angeordneten Lichtmodule erzeugen dieselbe Lichtverteilung. Wegen einer ungeraden Anzahl an Lichtmodule kann ein zentrales Lichtmodul eine Spotlichtverteilung mit einer hohen maximalen Lichtintensität etwa im Zentrum der Spotlichtverteilung, einer gegenüber der horizontalen Erstreckung der resultierenden Gesamtlichtverteilung beschränkten horizontalen Streuung und einer scharfen oberen, ebenen horizontalen Helldunkelgrenze erzeugen, welche die Helldunkelgrenze der Gesamtlichtverteilung definieren kann. Bei einer geraden Anzahl an Lichtmodulen, was nicht Teil der Erfindung ist, erzeugen die beiden zentralen Lichtmodule eine Spotlichtverteilung. Eine Beleuchtungseinrichtung mit übereinander angeordneten Lichtmodulen wären dann dementsprechend symmetrisch zu einer horizontalen Symmetrieebene aufgebaut.

Selbstverständlich ist auch ein Aufbau einer Beleuchtungseinrichtung denkbar, die aber nicht Teil dieser Erfindung ist, bei der an einer Seite zunächst mindestens ein Lichtmodul zur Erzeugung einer gebündelten Spotlichtverteilung und daneben mehrere breiter streuende Lichtmodule angeordnet sind. An der anderen Seite der Beleuchtungseinrichtung kann noch mindestens ein weiteres Lichtmodul angeordnet sein, das bezogen auf die Hauptabstrahlrichtungen der anderen Lichtmodule eine in einer horizontalen Ebene zur Seite, weg von dem mindestens einen Spotlichtmodul gerichtete Hauptabstrahlrichtung zur Erzeugung einer statischen Kurvenlichtverteilung aufweist. Diese nicht symmetrische Beleuchtungseinrichtung kann im Frontbereich eines Fahrzeugs derart auf einer Seite des Fahrzeugs angeordnet sein, dass die Hauptabstrahlrichtungen des mindestens einen Spotlichtmoduls und der breiter streuenden Lichtmodule im Wesentlichen in Fahrtrichtung und die Hauptabstrahlrichtung des mindestens einen Kurvenlichtmoduls zur Fahrzeugaußenseite hin gerichtet sind.

Gemäß einer anderen bevorzugten Ausführungsform erzeugen ein oder mehrere äußere Lichtmodule der nebeneinander angeordneten Lichtmodule der Beleuchtungseinrichtung jeweils eine zumindest in ihren Abmessungen, insbesondere in ihrer horizontalen Erstreckung, in etwa der resultierenden Gesamtlichtverteilung entsprechende Basislichtverteilung mit der geringsten maximalen Lichtintensität aller Teillichtverteilungen. Auch die Basislichtverteilung wird nach oben hin durch eine gerade, horizontale Helldunkelgrenze begrenzt. Diese liegt jedoch geringfügig unter der Helldunkelgrenze der Gesamtlichtverteilung bzw. ist unschärfer als die der Gesamtlichtverteilung, so dass die Helldunkelgrenze der Gesamtlichtverteilung primär von der Helldunkelgrenze der Spotlichtverteilung(en) und nicht von der Helldunkelgrenze der Basislichtverteilung(en) definiert wird.

Zwischen dem oder den die Spotlichtverteilung erzeugenden Lichtmodulen und den die Basislichtverteilung erzeugenden Lichtmodulen können weitere Lichtmodule angeordnet sein, welche jeweils eine Teillichtverteilung erzeugen, die von ihrer horizontalen Erstreckung in etwa der Gesamtlichtverteilung entsprechen und eine maximale Intensität aufweisen, die zwischen den maximalen Intensitäten der Spotlichtverteilung(en) und der Basislichtverteilung(en) liegt. Ein Beispiel der Beleuchtungseinrichtung, die aber nicht Teil dieser Erfindung ist, kann auch asymmetrisch aufgebaut sein, wobei dann bspw. einseitig außen an das äußere Lichtmodul der nebeneinander angeordneten Lichtmodule mindestens ein zusätzliches Lichtmodul angeordnet sein kann, welches ein einseitig zur Seite hin, vorzugsweise zum Fahrbahnrand hin, ausgerichtetes Teillichtbündel für ein statisches Kurvenlicht aussendet. Wenn mehrere Kurvenlichtmodule vorgesehen sind, können diese unterschiedlich weit zur Seite hin gerichtete Lichtbündel aussenden. Durch gezieltes Ansteuern der Lichtmodule beim Durchfahren einer Kurve kann ein abhängig vom Lenkradwinkel immer weiter zum Kurveninneren hin gerichtetes quasi-dynamisches Kurvenlichtbündel realisiert werden. Die Kurvenlichtmodule können nach und nach einzeln aktiviert werden oder kumulativ eingeschaltet werden.

Die nebeneinander angeordneten Lichtmodule können bei einer asymmetrischen Ausgestaltung der Beleuchtungseinrichtung, die auch nich Teil dieser Erfindung ist, parallel zu der Hauptaustrittsrichtung des Lichts aus der Beleuchtungseinrichtung versetzt zueinander angeordnet sein. Insbesondere wird vorgeschlagen, dass Reflektoren mit langen Brennweiten weiter hinten positioniert, also entgegen der Hauptaustrittsrichtung versetzt, sind als Reflektoren mit kurzen Brennweiten.

Gemäß anderer vorteilhafter Weiterbildungen der Erfindung wird vorgeschlagen, dass der Bezug zwischen der Halbleiterlichtquelle und der Reflexionsfläche eines Lichtmoduls, und/oder die Ausrichtung der einzelnen Lichtmodule in ihrer Gesamtheit in horizontaler Richtung flexibel eingestellt und in der eingestellten Position fixiert werden kann, um eine gewünschte Teillichtverteilung optimal erzeugen zu können. Die Verstellmöglichkeit dient in erster Linie der Justage einer Grundstellung der Beleuchtungseinrichtung vor ihrem bestimmungsgemäßen Betrieb, bspw. im Anschluss an eine Montage der Beleuchtungseinrichtung an einem Kraftfahrzeug oder im Rahmen einer technischen Untersuchung des Fahrzeugs und seiner Komponenten (statische Beleuchtungseinrichtung). Eine dynamische Variation der Teillichtverteilungen bzw. der Gesamtlichtverteilung während des bestimmungsgemäßen Betriebs der Beleuchtungseinrichtung, bspw. als dynamisches Kurvenlicht oder zur Leuchtweiteregulierung, ist dadurch nicht beabsichtigt, aber auch nicht ausgeschlossen.

Selbstverständlich ist es auch denkbar, die gesamte Beleuchtungseinrichtung, das heißt alle Lichtmodule gemeinsam, relativ zu einem Gehäuse der Beleuchtungseinrichtung oder gemeinsam mit dem Gehäuse in vertikaler Richtung zu verstellen, um die vertikale Position einer Helldunkelgrenze der resultierenden Gesamtlichtverteilung, bspw. im Rahmen einer Justage der vertikalen Grundstellung oder einer Leuchtweiteregulierung der Beleuchtungseinrichtung, einstellen zu können. Ebenso ist eine Verstellung der Beleuchtungseinrichtung in horizontaler Richtung denkbar, bspw. zur Justage der horizontalen Grundposition oder zur Realisierung einer Kurvenlichtfunktionalität.

Wenn die Reflexionsflächen benachbarter Lichtmodule unterschiedlich ausgestaltet sind bzw. die Lichtmodule unterschiedlich positioniert oder ausgerichtet sind, können sich zwischen den Reflexionsflächen benachbarter Lichtmodule vertikale Übergangsbereiche ergeben, die parallel zu einer durch die Hauptabstrahlrichtung der Halbleiterlichtquellen und die Hauptaustrittsrichtung des reflektierten Lichts aufgespannten Ebene verlaufen. Dabei sollen Flächen, die aus fertigungstechnischen Gründen geringfügig gegenüber der Bezugsebene, bspw. um bis zu 5°, verkippt werden, noch als parallel im Sinne der vorliegenden Beschreibung betrachtet werden. Um unkontrollierte Lichtreflexionen an den Übergangsbereichen, die in den Bereich der Gesamtlichtverteilung oberhalb der Helldunkelgrenze gelangen und dort zu unzulässig hohen Intensitätswerten führen könnten, zu vermeiden, wird vorgeschlagen, dass die Übergangsbereiche mit einer Streustruktur versehen sind. Diese kann bspw. Prismen, Zylinderlinsen, eine definierte oder zufällige Mikrostruktur und/oder einfach eine Aufrauung der Oberfläche der Übergangsbereiche umfassen. Dadurch können unkontrollierte und zufällige Intensitätsmaxima der Gesamtlichtverteilung, insbesondere oberhalb einer horizontalen Helldunkelgrenze, vermieden und die gesetzlichen Anforderungen an die Gesamtlichtverteilung besser erfüllt werden.

Bevorzugte Ausführungsformen und Abwandlungen der vorliegenden Erfindung sowie die damit verbundenen Vorteile werden nachfolgend unter Bezugnahme auf die Zeichnung näher erläutert. Dabei können die nachfolgend beschriebenen und in der Zeichnung dargestellten Merkmale sowohl einzeln als auch in beliebiger Kombination miteinander für die vorliegende Erfindung wichtige Aspekte bilden. Es zeigen:
Figur 1 ein Kraftfahrzeug in einer Ansicht von vorne;
Figur 2 einen Kraftfahrzeugscheinwerfer, wie er beispielsweise in einem Kraftfahrzeug nach Figur 1 eingebaut ist;
Figur 3 eine erfindungsgemäße Beleuchtungseinrichtung, wie sie beispielsweise in einem Kraftfahrzeug nach Figur 1 oder in einem Kraftfahrzeugscheinwerfer nach Figur 2 eingebaut ist;
Figuren 4 bis 6 ein Beispiel für ein lichttechnisches System der erfindungsgemäßen Beleuchtungseinrichtung gemäß Figur 3 in einer perspektivischen Ansicht, einer Ansicht von vorne und einer Ansicht von oben;
Figuren 7 und 8 zwei mögliche Anordnungen einer Halbleiterlichtquelle relativ zu einer Reflexionsfläche eines Lichtmoduls der erfindungsgemäßen Beleuchtungseinrichtung;
Figuren 9 bis 14 verschiedene Ansichten und Ausgestaltungen von Reflexionsflächen für den Einsatz in einem Lichtmodul der erfindungsgemäßen Beleuchtungseinrichtung;
Figuren 15 und 16 eine weitere mögliche Ausgestaltung des lichttechnischen Systems der Beleuchtungseinrichtung, die aber nicht Teil der Erfindung ist;
Figuren 17 und 18 weitere Beispiele für ein lichttechnisches System der Beleuchtungseinrichtung, die auch nicht Teil der Erfindung sind; und
Figuren 19 bis 21 resultierende Gesamtlichtverteilungen der erfindungsgemäßen Beleuchtungseinrichtung, abgebildet auf einem in einem Abstand zu der Beleuchtungseinrichtung vor dieser angeordneten Messschirm.

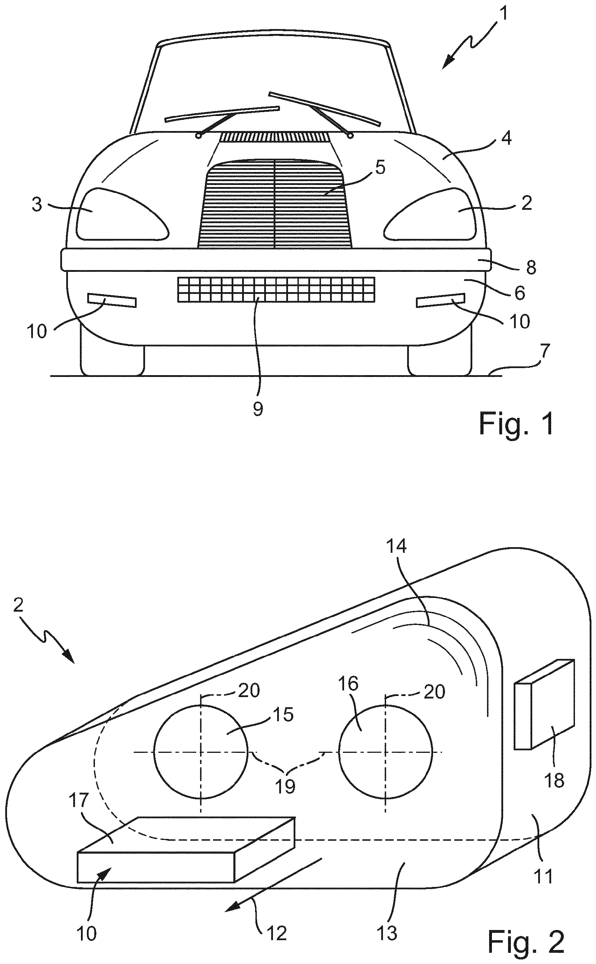

In Figur 1 ist ein Kraftfahrzeug in einer Ansicht von vorne dargestellt. Das Kraftfahrzeug ist in seiner Gesamtheit mit dem Bezugszeichen 1 bezeichnet. Im vorderen Bereich des Kraftfahrzeugs sind Scheinwerfer 2, 3 in entsprechenden Einbauöffnungen einer Fahrzeugkarosserie 4 angeordnet und dort befestigt. Vorzugsweise sind die Scheinwerfer 2, 3 rechts und links von einem Kühlergrill 5 des Kraftfahrzeugs 1 angeordnet. Unterhalb des Kühlergrills 5 und der Scheinwerfer 2, 3 ist ein Stoßfänger 6 des Fahrzeugs 1 angeordnet und befestigt. Der Stoßfänger 6 kann relativ weit nach unten in Richtung einer Fahrbahn 7 gezogen sein und gleichzeitig die Funktion eines Front-Spoilers erfüllen. Es ist denkbar, dass der Stoßfänger 6 im vorderen Bereich und/oder seitlich eine kratzfeste, stoßabsorbierende Stoßleiste 8 umfasst. In dem Stoßfänger 6 können Kühlöffnungen 9, beispielsweise in Form von Kühlschlitzen, ausgebildet sein, durch die Kühlluft in den Motorraum, insbesondere auf einen dahinter im Motorraum befindlichen Kühler, gelangen kann.

In dem Stoßfänger 6 sind erfindungsgemäße Beleuchtungseinrichtungen 10 angeordnet und befestigt. In dem dargestellten Ausführungsbeispiel von Figur 1 sind die Beleuchtungseinrichtungen 10 beispielsweise als separat von den Fahrzeugscheinwerfern 2, 3 ausgebildete Nebelscheinwerfer realisiert. Selbstverständlich können die erfindungsgemäßen Beleuchtungseinrichtungen 10 auch an einer beliebig anderen Stelle in dem Stoßfänger 6 und/oder der Kraftfahrzeugkarosserie 4 angeordnet und befestigt sein. Ferner ist es denkbar, dass das von den erfindungsgemäßen Beleuchtungseinrichtungen 10 ausgesandte Gesamtlichtbündel statt als Nebellicht als ein Basislicht eines Abblendlichts genutzt wird. In einem solchen Fall würde das Abblendlicht bspw. aus einer Basislichtverteilung und einer diese überlagernden Spotlichtverteilung zusammengesetzt sein. Die Basislichtverteilung weist eine relativ breite Streuung sowie eine im Wesentlichen ebene, horizontale obere Helldunkelgrenze auf. Die Basislichtverteilung ist in erster Linie für eine ausreichende Seitenstreuung des Abblendlichts verantwortlich, d.h. durch die Basislichtverteilung sollen insbesondere die seitlichen Bereiche der Fahrbahn 7 vor dem Kraftfahrzeug 1 in ausreichendem Maße mit Licht ausgeleuchtet werden. Die Spotlichtverteilung weist eine geringere horizontale Streuung als die Basislichtverteilung und eine horizontale, asymmetrische obere Helldunkelgrenze auf, welche die asymmetrische Helldunkelgrenze der resultierenden Abblendlichtverteilung definiert. Die Spotlichtverteilung kann durch eines oder mehrere Lichtmodule der Scheinwerfer 2, 3 oder anderer separater Beleuchtungseinrichtungen erzeugt werden.

Die erfindungsgemäße Beleuchtungseinrichtung 10 kann nicht nur - wie in Figur 1 gezeigt - als separat von den Scheinwerfern 2, 3 ausgebildete Beleuchtungseinrichtung, sondern beispielsweise auch - wie in Figur 2 gezeigt - als in einen der Scheinwerfer 2, 3 integriert ausgebildet sein. In Figur 2 ist beispielhaft der in Fahrtrichtung linke Scheinwerfer 2 eines Kraftfahrzeugs 1 gezeigt. Der Scheinwerfer 2 umfasst ein Scheinwerfergehäuse 11, das vorzugsweise aus einem Kunststoff besteht. Das Gehäuse 11 weist in einer Hauptaustrittsrichtung 12 des Lichts (entspricht in etwa der Fahrtrichtung des Fahrzeugs 1) eine Lichtdurchtrittsöffnung 13 auf, die mittels einer transparenten Abdeckscheibe 14 verschlossen ist. Die Abdeckscheibe 14 ist aus einem transparenten Kunststoff oder Glas gefertigt. Sie kann zumindest bereichsweise mit optisch wirksamen Profilen (zum Beispiel Prismen und/oder Zylinderlinsen) versehen und als sogenannte Streuscheibe ausgebildet sein. Alternativ kann die Abdeckscheibe 14 auch ohne optisch wirksame Profile als eine sogenannte klare Scheibe ausgebildet sein.

Im Inneren des Scheinwerfergehäuses 11 ist mindestens ein Lichtmodul zur Erzeugung einer vorgegebenen Scheinwerferfunktion angeordnet. In dem Ausführungsbeispiel aus Figur 2 sind im Inneren des Scheinwerfergehäuses 11 zwei Lichtmodule 15, 16 angeordnet. Die Lichtmodule 15, 16 können als Reflexionsmodule oder als Projektionsmodule ausgebildet sein. Sie dienen zur Erzeugung einer beliebigen Scheinwerferfunktion zur Ausleuchtung der Fahrbahn 7 vor dem Fahrzeug 1, beispielsweise einer Abblendlichtverteilung, einer Fernlichtverteilung, einer Stadtlichtverteilung, einer Landstraßenlichtverteilung, einer Autobahnlichtverteilung, einer Schlechtwetterlichtverteilung, einer Kurvenlichtverteilung und/oder einer beliebig anderen adaptiven Lichtverteilung. Des weiteren können in dem Scheinwerfergehäuse 11 auch beliebige Leuchtmodule (nicht dargestellt) integriert sein, die zur Erzeugung eines Blinklichts, eines Tagfahrlichts, eines Positionslichts und/oder einer beliebig anderen Leuchtfunktion dienen.

Schließlich ist in dem Scheinwerfergehäuse 11 auch eine erfindungsgemäße Beleuchtungseinrichtung 10 integriert. Die Beleuchtungseinrichtung 10 kann beispielsweise in einem eigenen Gehäuse 17 angeordnet sein, das ebenfalls vorzugsweise aus Kunststoff besteht. Das Gehäuse 17 der Beleuchtungseinrichtung 10 kann integraler Bestandteil des Scheinwerfergehäuses 11 sein. Es ist denkbar, dass das Gehäuse 17 der Beleuchtungseinrichtung 10 in einer dem Design im Inneren des Scheinwerfers 2 entsprechenden Weise ausgebildet und eventuell beschichtet ist, beispielsweise mit einer verspiegelten Beschichtung, wie die übrigen im Scheinwerferinneren angeordneten Abdeckrahmen oder -blenden (nicht dargestellt). Alternativ oder zusätzlich kann die Beleuchtungseinrichtung 10 auch durch geeignete Abdeckblenden vom restlichen Innenraum des Scheinwerfergehäuses 11 abgetrennt sein. Selbstverständlich kann die Beleuchtungseinrichtung 10 beziehungsweise ein lichttechnisches System der Beleuchtungseinrichtung 10 auch an einer beliebig anderen Stelle innerhalb des Scheinwerfergehäuses 11, beispielsweise seitlich oder unterhalb der oberen Gehäusewand angeordnet sein. Ebenso ist es denkbar, dass die Beleuchtungseinrichtung 10 außen an dem Gehäuse 11 des Scheinwerfers 2 angeordnet und befestigt ist.

An einer Außenseite des Scheinwerfergehäuses 11 ist in dem in Figur 2 dargestellten Ausführungsbeispiel ein Steuergerät 18 angeordnet. Selbstverständlich kann das Steuergerät 18 auch an einer beliebigen anderen Stelle außerhalb oder innerhalb des Scheinwerfergehäuses 11 angeordnet sein. Das Steuergerät 18 dient beispielsweise zur Steuerung und/oder Regelung der Lichtmodule 15 und/oder 16, insbesondere der Erzeugung der vorgegebenen Scheinwerferfunktionen. Das Steuergerät 18 weist vorzugsweise ein Gehäuse aus einem elektromagnetische Strahlung gut abschirmenden sowie gut wärmeleitfähigen Material, wie beispielsweise Metall, auf. Das Gehäuse ist vorzugsweise aus Aluminiumdruckguss gefertigt und kann Kühlrippen und/oder Kühlstifte aufweisen. Da das Steuergerät 18 außerhalb des Scheinwerfergehäuses 11 angeordnet ist, verlaufen Steuerleitungen (nicht dargestellt) von dem Steuergerät 18 durch eine Öffnung im Scheinwerfergehäuse 11 in den Innenraum des Scheinwerfers 2 und stehen mit den Lichtmodulen 15 und/oder 16 beziehungsweise mit deren elektrischen Komponenten in Verbindung. Insbesondere ist es denkbar, dass die Steuerleitungen des Steuergeräts 18 mit einer Lichtquelle der Lichtmodule 15; 16, bspw. mit einem Zündgerät einer Gasentladungslampe, und/oder mit Aktuatoren, insbesondere in Form von Elektromotoren und/oder Elektromagneten, zum Bewegen der Lichtmodule 15; 16 um eine horizontale Achse 19 (zur Realisierung einer Leuchtweiteverstellung) sowie um eine vertikale Achse 20 (zur Realisierung einer dynamischen Kurvenlichtfunktion) in Verbindung stehen.

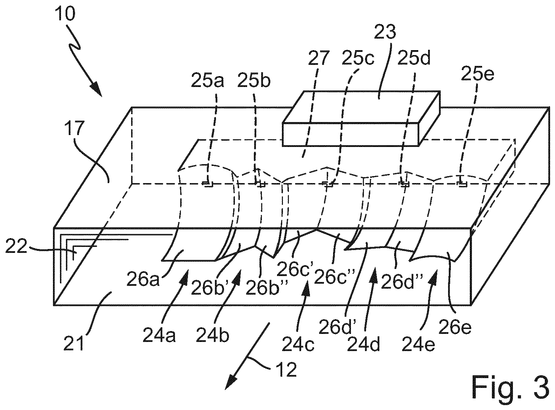

Es ist denkbar, dass das Steuergerät 18 auch zur Ansteuerung der Beleuchtungseinrichtung 10 und zur Realisierung beziehungsweise Variation der durch die Beleuchtungseinrichtung 10 erzeugten Gesamtlichtverteilung dient. Alternativ kann für die Beleuchtungseinrichtung 10 auch ein separates Steuergerät 23 (vgl. Figur 3) vorgesehen sein, das ebenfalls an einer beliebigen Stelle innerhalb oder außerhalb des Scheinwerfergehäuses 11 angeordnet sein kann.

Die erfindungsgemäße Beleuchtungseinrichtung 10 ist im Detail in Figur 3 näher gezeigt. Das Gehäuse 17 der Beleuchtungseinrichtung 10 weist in der Hauptaustrittsrichtung 12 eine Lichtaustrittsöffnung 21 auf, die mittels einer Abdeckscheibe 22, die vorzugsweise aus transparentem Kunststoff oder Glas besteht, verschlossen sein kann. Dies ist insbesondere dann sinnvoll, wenn die Beleuchtungseinrichtung 10 - wie in dem Ausführungsbeispiel von Figur 1 gezeigt - als separate Einheit an dem Kraftfahrzeug 1 angeordnet ist. Bei dem Ausführungsbeispiel aus Figur 2, wo die Beleuchtungseinrichtung 10 in einem Scheinwerfer 2 integriert ist, wäre es dagegen denkbar, dass die Beleuchtungseinrichtung 10 statt der eigenen Abdeckscheibe 22 die Abdeckscheibe 14 des Scheinwerfers 2 nutzt, durch die das von der Beleuchtungseinrichtung 10 erzeugte Lichtbündel hindurchtreten kann und durch die ein Eintreten von Schmutz und/oder Feuchtigkeit in das Innere des Scheinwerfers 2 und damit auch der Beleuchtungseinrichtung 10 vermieden wird.

In dem Ausführungsbeispiel aus Figur 3 ist an der Außenseite des Gehäuses 17 ein separates Steuergerät 23 zur Steuerung und/oder Regelung des lichttechnischen Systems der Beleuchtungseinrichtung 10 vorgesehen. Dies kann insbesondere für die Ausführungsform aus Figur 1 sinnvoll sein, wo die Beleuchtungseinrichtung 10 als separate Einheit an einer beliebigen Stelle im oder am Kraftfahrzeug 1 angeordnet ist. Bei dem Ausführungsbeispiel aus Figur 2 kann es jedoch sinnvoll sein, die Funktionalität des separaten Steuergeräts 23 der Beleuchtungseinrichtung 10 in das Steuergerät 18 des Scheinwerfers 2 zu integrieren.

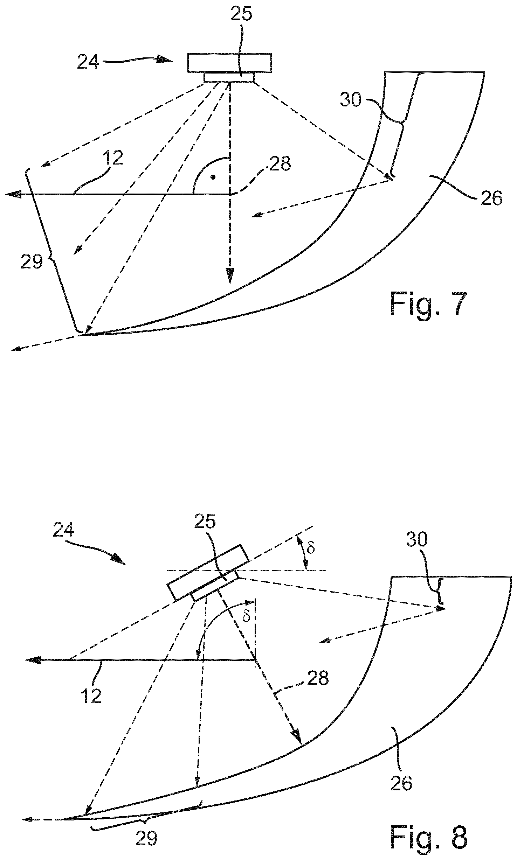

Im Inneren des Gehäuses 17 ist das lichttechnische System der Beleuchtungseinrichtung 10 angeordnet. Dieses umfasst mehrere Lichtmodule 24a, 24b, 24c, 24d, 24e, die entlang einer horizontalen, in etwa senkrecht zur Hauptaustrittsrichtung 12 verlaufenden imaginären Achse nebeneinander angeordnet sind. Selbstverständlich können die Lichtmodule 24a, 24b, 24c, 24d, 24e auch entlang einer vertikalen, imaginären Achse übereinander oder in beliebiger Weise schräg versetzt zueinander angeordnet sein. Jedes Lichtmodul 24a bis 24e umfasst mindestens eine Halbleiterlichtquelle 25a, 25b, 25c, 25d, 25e und mindestens eine, der mindestens einen Halbleiterlichtquelle 25a bis 25e funktional zugeordnete Reflexionsfläche 26a, 26b, 26c, 26d, 26e. Während die äußeren Lichtmodule 24a, 24e lediglich eine gewölbte Reflexionsfläche 26a, 26e aufweisen, umfassen die mittleren Lichtmodule 24b, 24c, 24d jeweils zwei Reflexionsflächen 26b', 26b"; 26c', 26c"; 26d', 26d", wobei die Reflexionsflächen 26b', 26b" bis 26d', 26d" eines Lichtmoduls 24b bis 24d jeweils in einem Winkel zueinander stehen. Die gewölbten Reflexionsflächen 26a, 26e beziehungsweise die in einem Winkel zueinander stehenden Reflexionsflächen 26b', 26b" bis 26d', 26d" schließen jeweils eine Kavität ein, in die das Licht der Halbleiterlichtquellen 25a bis 25e in einer Hauptabstrahlrichtung 28 (vergleiche Figuren 7 und 8) abgestrahlt wird.

Die Lichtquellen 25a bis 25e sind vorzugsweise auf einem starren und ebenen Leitungsträger (nicht dargestellt) angeordnet und über diesen mit einer elektrischen Energieversorgung verbunden, die vorzugsweise durch das Steuergerät 23 zur Verfügung gestellt wird. Dabei können die Lichtquellen 25a bis 25e jeweils auf separaten oder gruppenweise auf gemeinsamen Leitungsträgern angeordnet sein. Die Halbleiterlichtquellen 25a bis 25e sind oberhalb der Reflektorelemente 26a bis 26e angeordnet und strahlen Licht in der Hauptabstrahlrichtung im Wesentlichen senkrecht nach unten. Das ausgesandte Licht wird von den Reflexionsflächen 26a bis 26e im Wesentlichen in die Hauptaustrittsrichtung 12 reflektiert, so dass sich vor dem Fahrzeug 1 eine gewünschten Teillichtverteilungen und durch deren Überlagerung die resultierende Gesamtlichtverteilung ergibt. Die Halbleiterlichtquellen 25a bis 25e stehen vorzugsweise über die Leitungsträger wärmetechnisch leitend mit einem Kühlkörper 27 in Verbindung. Der Kühlkörper 27 dient zur besseren Abgabe der von den Lichtquellen 25a bis 25e während ihres Betriebs erzeugten Wärme an die Umgebung. Zu diesem Zweck weist der Kühlkörper 27 oberflächenvergrößernde Elemente, beispielsweise in Form von Kühlrippen und/oder Kühlstiften, auf. Er besteht vorzugsweise aus einem gut wärmeleitfähigem Material, insbesondere Metall, besonders bevorzugt einem Aluminiumdruckguss. Die Größe und Ausgestaltung des Kühlkörpers 27 ist vorzugsweise an die Wärmeerzeugung der Lichtquellen 25a bis 25e angepasst.

Die Reflexionsflächen 26a bis 26e können an dem Kühlkörper 27 angeordnet und befestigt sein oder sogar als integraler Bestandteil des Kühlkörpers 27 ausgebildet sein. Um jedoch den Modularitätsgedanken der vorliegenden Erfindung beizubehalten, ist es vorteilhaft, wenn die Reflektoren 26a bis 26e jeweils separat ausgebildet sind und an dem Kühlkörper 27 in einer gewünschten Position und Ausrichtung jeweils individuell angeordnet und befestigt werden können. Die Lichtquellen 25a bis 25e sind vorzugsweise entweder unmittelbar oder über die Leitungsträger jeweils an einem in der Hauptaustrittsrichtung 12 nach vorne ragenden Befestigungsabschnitt befestigt, der in einem festen Bezug zu der der Lichtquelle 25a bis 25e jeweils zugeordneten Reflexionsfläche 26a bis 26e steht. Die Befestigungsabschnitte stehen vorzugsweise mit dem Kühlkörper 27 wärmetechnisch leitend in Verbindung. Auch hierbei ist es wünschenswert, dass die Lichtquellen 25a bis 25e verstellbar an dem Befestigungsabschnitt des Kühlkörpers 27 befestigt sind, um die Flexibilität und Modularität der erfindungsgemäßen Beleuchtungseinrichtung 10 beizubehalten.

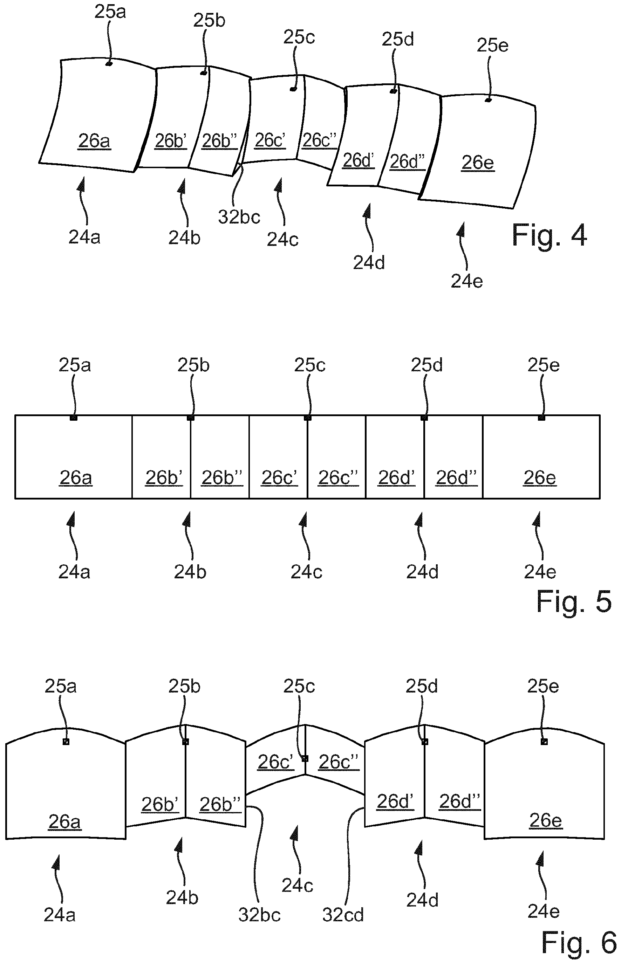

In den Figuren 4 bis 6 ist eine erste bevorzugte Ausgestaltung des lichttechnischen Systems der Beleuchtungseinrichtung 10 dargestellt. Das dort gezeigte lichttechnische System umfasst fünf Lichtmodule 24a bis 24e mit fünf Reflektoren 26a bis 26e sowie fünf Halbleiterlichtquellen 25a bis 25e. Die Lichtquellen 25a bis 25e sind vorzugsweise als Leuchtdioden (LEDs) ausgebildet. Statt der dargestellten jeweils einen Lichtquelle 25a bis 25e je Lichtmodul 24a bis 24e ist es auch denkbar, dass einem oder mehreren der Lichtmodule 24a bis 24e eine Gruppe mehrerer Halbleiterlichtquellen 25a bis 25e (sog. LED-Array) zugeordnet ist. Die Lichtquellen 25a bis 25e sind oberhalb der als Halbschalen ausgebildeten Reflektoren 26a bis 26e angeordnet und strahlen Licht in der im Wesentlichen senkrecht nach unten gerichteten Hauptabstrahlrichtung 28 (vergleiche Figuren 7 und 8) ab.

Die LEDs 25 können auch um eine horizontale Achse gedreht werden, so dass sich die Hauptabstrahlrichtung 28 verändert, wie dies beispielsweise in Figur 8 dargestellt ist. Während bei dem Ausführungsbeispiel aus Figur 7 ein Teil 29 des von der LED 25 ausgesandten Lichts verloren geht, da es nicht auf die Reflexionsfläche 26 trifft, und ein Teil 30 der Reflexionsfläche 26 ungenutzt bleibt, da auf diesen Teil 30 keine von der LED 25 ausgesandte Lichtstrahlen auftreffen, ist dies bei dem Ausführungsbeispiel aus Figur 8 mit um die horizontale Achse gedrehter LED 25 anders. Dabei trifft auch der Teil 29 des von der LED 25 ausgesandten Lichts auf die Reflexionsfläche 26 und ist der ungenutzte Bereich 30 der Reflexionsfläche 26 sehr klein. Insgesamt weist das Lichtmodul 24 gemäß der Ausführungsform aus Figur 8 einen besseren Wirkungsgrad auf als das Lichtmodul 24 aus Figur 7.

Ein einzelner Reflektor 26 eines Lichtmoduls 24 hat lichttechnisch eine genau zugeordnete Funktion. Dementsprechend ergibt sich auch eine definierte Form und Anordnung beziehungsweise Ausrichtung der Reflexionsflächen 26 relativ zu den ihnen zugeordneten LEDs 25. So kann beispielsweise abhängig von der Ausgestaltung der Reflexionsfläche 26 aus einem Reflektorelement 26 eine mittenbetonende Spotlichtverteilung, eine breit streuende gleichmäßige Basislichtverteilung, eine mittelbreit streuende Lichtverteilung oder ein einseitig ausgerichtetes Kurvenlicht werden. Bei dem Ausführungsbeispiel aus den Figuren 4 bis 6 erzeugt beispielsweise das von den Reflexionsflächen 26c' und 26c" des auf einer imaginären vertikalen Mittelebene angeordneten mittleren Lichtmoduls 24c der Beleuchtungseinrichtung 10 eine mittenbetonte Spotlichtverteilung mit einer relativ geringen horizontalen Streuung im Bereich von etwa ± 20°, vorzugsweise im Bereich von ± 15°. Ein oberer Abschnitt der von dem Lichtmodul 24c erzeugten Teillichtverteilung weist eine scharfe, gerade horizontale Helldunkelgrenze auf, welche im Wesentlichen die Helldunkelgrenze der resultierenden Gesamtlichtverteilung der Beleuchtungseinrichtung 10 definiert. Die maximalen Lichtintensitätswerte im Zentrum der Spotlichtverteilung werden durch die Anforderungen der gesetzlichen Regelungen für die resultierende Gesamtlichtverteilung festgelegt. Vorzugsweise erzeugt das im Bereich der vertikalen Mittelebene angeordnete Lichtmodul 24c eine Lichtverteilung mit relativ hohen Intensitätswerten.

Die Reflexionsflächen 26a, 26e der äußeren Lichtmodule 24a, 24e erzeugen jeweils eine als Basislichtverteilung dienende Teillichtverteilung, die eine der resultierenden Gesamtlichtverteilung entsprechende horizontale Streuung aufweist, das heißt die von den äußeren Reflexionsflächen 26a, 26e reflektierten Teillichtbündel decken jeweils die ganze Breite der Gesamtlichtverteilung der Beleuchtungseinrichtung 10 ab. Allerdings verfügen diese durch die äußeren Lichtmodule 24a, 24e erzeugten Basislichtbündel über eine relativ geringe Intensität. Die Reflexionsflächen 26b', 26b"; 26d', 26d" der Lichtmodule 24b, 24d, die zwischen dem mittigen Spot-Lichtmodul 24c und den äußeren Basis-Lichtmodulen 24a, 24e angeordnet sind, erzeugen Teillichtverteilungen, die jeweils fast die gesamte Breite der Gesamtlichtverteilung der Beleuchtungseinrichtung 10 abdecken und deren maximale Intensitätswerte im Zentrum der Teillichtverteilungen zwischen dem Wert für die Basis-Lichtverteilung und dem Wert für die Spot-Lichtverteilung liegen. In der Summe ergibt sich somit eine durch die Anforderungen der einschlägigen gesetzlichen Regelung festgelegte maximale Intensität des Gesamtlichtbündels der Beleuchtungseinrichtung 10.

Selbstverständlich ist es laut einem Beispiel, das nicht Teil der Erfindung ist, auch denkbar, dass das von dem mittleren Lichtmodul 24c erzeugte Teillichtbündel nicht die höchste Intensität und die von den äußeren Lichtmodulen 24a, 24e erzeugten Teillichtbündel nicht die niedrigste Intensität aufweisen. Die Intensitätswerte der von den einzelnen Lichtmodulen 24a bis 24e erzeugten Teillichtverteilungen können beliebig variiert werden.

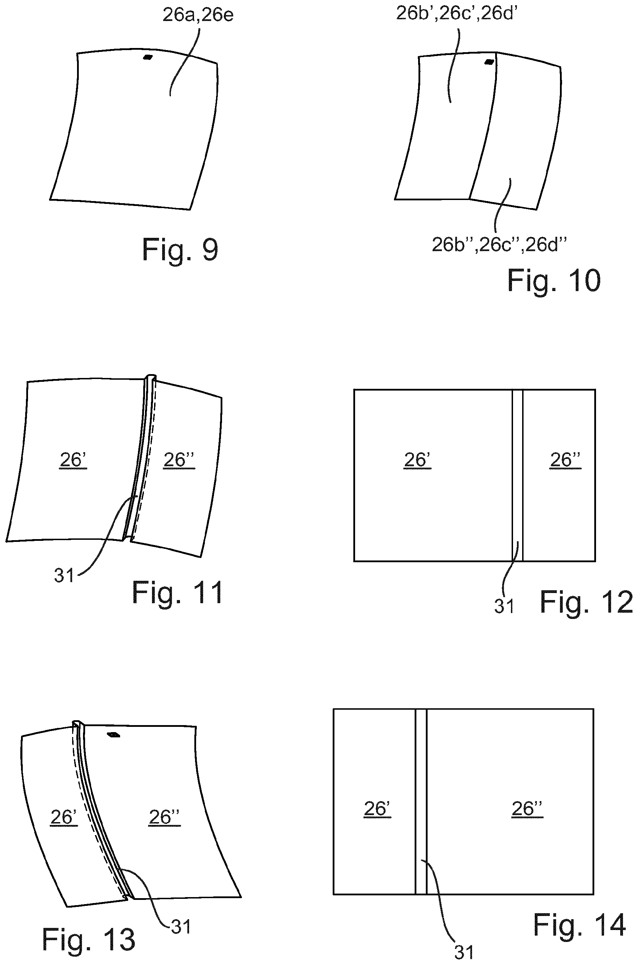

In dem beschriebenen Ausführungsbeispiel, wo die Gesamtlichtverteilung eine Nebellichtverteilung gemäß ECE R.19 F3 ist, erzeugt jedes Reflektorelement 26 des lichttechnischen Systems der Beleuchtungseinrichtung 10 eine gerade, horizontal verlaufende Helldunkelgrenze, wobei die resultierende Helldunkelgrenze der Gesamtlichtverteilung der Beleuchtungseinrichtung 10 im Wesentlichen durch den Verlauf im oberen Abschnitt der Spot-Teillichtverteilung, die von dem mittleren Lichtmodul 24c erzeugt wird, definiert ist. Erst durch Überlagerung der von den einzelnen Lichtmodulen 24a bis 24e erzeugten Teillichtverteilungen ergibt sich die gewünschte resultierende Gesamtlichtverteilung der Beleuchtungseinrichtung 10. Durch diese lichttechnische Ordnung der Reflexionsflächen 26 und durch die kompakte Bauform der Einzelelemente des lichttechnischen Systems ist es möglich, die Anzahl von Teilflächen der Reflektoren 26 innerhalb eines Lichtmoduls 24 auf ein Minimum zu reduzieren. Ein einzelnes Reflektorelement besteht aus nur einer homogenen Fläche ohne Stufen und Kanten (vergleiche Figur 9) oder aus maximal zwei homogenen konvexen reflektierenden Freiformteilflächen (vergleiche Figur 10).

Die Figuren 11 bis 14 der vorliegenden Patentanmeldung zeigen eine spezielle Ausführungsform der Reflexionsflächen 26, die durch zwei in einem Winkel zueinander stehende reflektierende Freiform-Teilflächen (vergleiche Figur 10) gebildet werden. Dabei ist bei den aus Figur 10 bekannten Reflektorflächen ein Mittelbereich, wo die beiden Freiform-Teilflächen aneinandergrenzen, als ein Knick (oder als eine Stufe) ausgebildet. Im Bereich dieses Knicks kann die Reflexionsfläche 26b, 26c, 26d nur relativ ungenau gefertigt werden. Die Herstellung eines Reflektorelements 26, das aus mindestens zwei Teilreflektorflächen 26', 26" besteht, ist insbesondere im Mittelbereich, wo die Teilflächen aufeinandertreffen, schwierig, da Werkzeuge für die Herstellung der Reflexionsflächen 26 im Bereich des Knicks zwischen den zwei Teilreflektorflächen 26', 26" relativ spitz zulaufen müssen und genau dort schneller abgenutzt werden als in anderen Bereichen. Das führt dazu, dass der Knick nicht die gewünschte Schärfe erreicht, sondern mehr als gewünscht abgerundet ist. Entsprechendes gilt natürlich auch, wenn zwischen den zwei Teilflächen 26', 26" eine Stufe ausgebildet ist.

Außerdem kann es bei der Herstellung der Reflexionsfläche 26 im Bereich des Knicks zu Anhäufungen von reflektierendem Lack und/oder anderen Beschichtungen kommen. Auch dies führt zu einer ungewollten Abrundung des Knicks. Zusammenfassend kann die gewünschte Idealform der Reflexionsfläche 26 beziehungsweise der Teilreflektorflächen 26', 26" nicht bis dicht an den Knick heran gewährleistet werden. Die Folge können unkontrollierte Reflexionen von Licht in der Nähe des Knicks sein, die, sofern sie in einem Bereich der resultierenden Gesamtlichtverteilung oberhalb der Helldunkelgrenze reflektiert werden, zu unzulässig hohen Intensitätsmaxima führen. Um eine undefinierte und ungenaue Form der Teilreflektorflächen 26', 26" im Bereich des Knicks zu vermeiden, wird vorgeschlagen, dass statt des Knicks (vergleiche Figur 10) zwischen den zwei Teilreflektorflächen 26', 26" ein definierter Spalt beziehungsweise eine definierte Nut 31 ausgebildet ist. Die auf diese Weise erzielbar resultierende Gesamtlichtverteilung ist homogener und die Herstellung des Reflektorelements 26 weniger toleranzanfällig. Die Innenseiten der Nut 31 können mit einer Streustruktur versehen sein, um wiederum unkontrollierte Reflexionen und unerwünschte Intensitätsmaxima in der Gesamtlichtverteilung zu vermeiden. Durch die Anordnung eines Spalts 31 auf oder in der Reflexionsfläche 26 wird sichergestellt, dass die Teilreflektorflächen 26', 26" über ihre gesamte Fläche, also insbesondere auch bis an den Rand des Spalts 31, ihre berechnete optimale Form aufweisen.

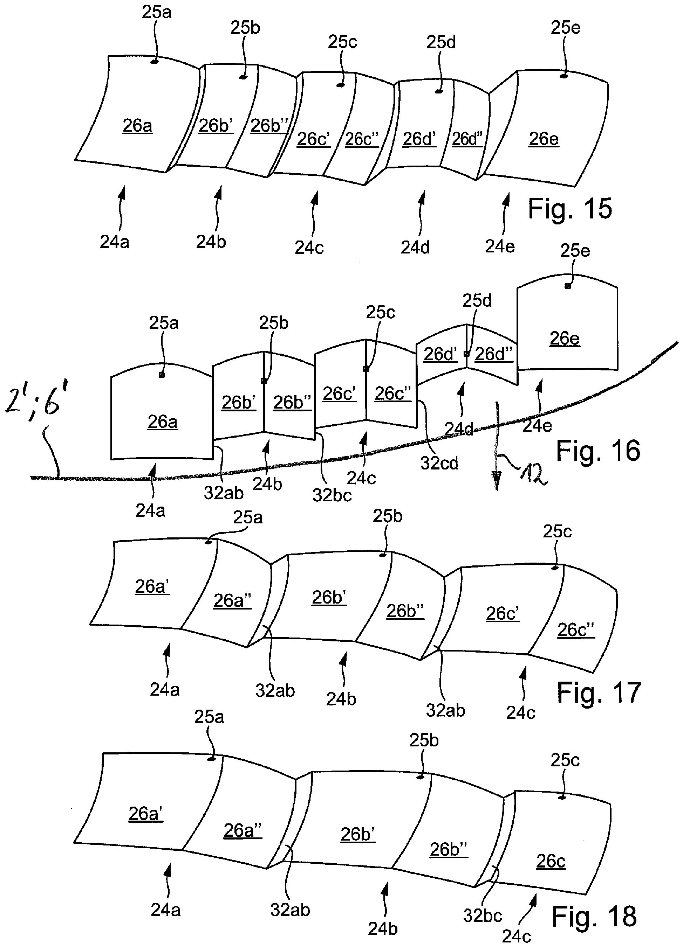

Die Nut 31 kann mittig (vergleiche die Figuren 11 und 12) oder aber in der Draufsicht seitlich versetzt (vergleiche die Figuren 13 und 14) auf bzw. in dem Reflektorelement 26 ausgebildet sein. Es ist denkbar, dass beispielsweise das Reflektorelement 26 aus Figur 13 als Reflexionsfläche für das Lichtmodul 24b und das Reflektorelement 26 aus Figur 14 als Reflexionsfläche für das Lichtmodul 24d verwendet wird. Die asymmetrische Anordnung des Spalts 31 auf der Reflektorfläche 26 hat den Vorteil, dass sich die reflektierten Teillichtbündel überlagern und dadurch die durch die Spalte 31 in den Reflektorflächen 26 verursachten Verluste in den durch die Reflexionsflächen 26b beziehungsweise 26d reflektierten Teillichtbündeln kompensieren. Laut einem weiteren Beispiel, das nicht Teil der Erfindung ist,können die nebeneinander angeordneten Lichtmodule 24 der Beleuchtungseinrichtung 10, wie in den Figuren 15 bis 18 gezeigt, parallel zu einer optischen Achse, das heißt im Wesentlichen parallel zur Hauptaustrittsrichtung 12 des Lichts aus der Beleuchtungseinrichtung 10, versetzt zueinander angeordnet sein. Dadurch kann die Beleuchtungseinrichtung 10 einem gebogenen Verlauf eines Bugspoilers 6 oder einer Abdeckscheibe 14 eines Scheinwerfers 2, 3, in dem die Beleuchtungseinrichtung 10 angeordnet ist, besonders gut folgen. Der gebogene Verlauf ist in Figur 16 durch eine Linie 6' bzw. 2' angedeutet. Beispielweise sind Reflektoren 26 mit langen Brennweiten, zum Beispiel die Reflektoren 26d und 26e aus dem Ausführungsbeispiel aus Figur 15, weiter hinten positioniert als Reflektoren 26 mit kurzen Brennweiten, wie beispielsweise die Reflektoren 26a, 26b aus Figur 15. Das lichttechnische System aus Figur 15 ist in einer Ansicht von oben in Figur 16 dargestellt. Die Anordnung gemäß der Figuren 15 und 16 hat den funktionellen Vorteil, dass kein Streulicht von benachbarten Lichtquellen 25 auf einzelne Reflektorelemente 26 fallen kann und die Form der Beleuchtungseinrichtung 10 sich stilistisch optimal in den Verlauf 2', 6' eines Scheinwerfers 2 beziehungsweise der Fahrzeugkarosserie 4 einfügen kann.

In Figur 17 ist ein lichttechnisches System einer nicht-erfindungsgemäßen Beleuchtungseinrichtung 10 mit einer gegenüber den bisherigen Ausführungsformen verminderten Anzahl von Leuchtdioden 25, nämlich drei Leuchtdioden 25a bis 25c abgebildet. Ferner verfügt das lichttechnische System aus Figur 17 über lediglich drei Reflektorelemente 26a bis 26c, die jeweils aus zwei gewölbten zueinander in einem Winkel angeordneten Teilreflektorflächen 26a', 26a"; 26b', 26b" und 26c', 26c" bestehen. Die Reflektorelemente 26 sind breiter als bei den bisher vorgestellten Ausführungsformen. Alternativ können die breiteren Reflektorelemente 26a, 26b aber auch gut mit einem oder mehreren Einzelelementen mit lediglich einer homogenen Reflexionsfläche 26c (vergleiche Figur 18) kombiniert werden. Das Einzelreflexionselement 26c kann beispielsweise ein einseitig seitlich gerichtetes Teillichtbündel für eine Kurvenlichtfunktionalität der resultierenden Gesamtlichtverteilung erzeugen.

In den Figuren 16 bis 18 sind Übergangsbereiche 32 zwischen benachbarten Reflexionsflächen 26 bezeichnet. Der Übergangsbereich zwischen den Reflexionsflächen 26a und 26b ist mit 32ab bezeichnet. In entsprechender Weise ist der Übergangsbereich zwischen den Reflexionsflächen 26b und 26c ist mit 32bc bezeichnet. Die Übergangsbereiche 32 sind vorzugsweise als ebene Flächen ausgestaltet, die sich in Ebenen erstrecken, die parallel oder annähernd parallel zu einer durch die Hauptabstrahlrichtung 28 der Halbleiterlichtquellen und die Hauptaustrittsrichtung 12 des reflektierten Lichts aufgespannten Ebene verlaufen. Der Fall "annähernd parallel" ist relevant zur Erzielung von Entformschrägen des Reflektors mit Abweichungen von bis zu 5° von der angegebenen Fläche, um einen gefertigten Reflektor besser aus einer Form, bspw. einer Spritzgussform, entnehmen zu können. Um ungewollte und unkontrollierte Reflexionen an diesen Übergangsbereichen 32 zu vermeiden, können diese zumindest bereichsweise mit einer Streustruktur versehen sein. Diese kann bspw. Prismen, Zylinderlinsen, eine definierte oder zufällige Mikrostruktur und/oder einfach eine Aufrauung der Oberfläche der Übergangsbereiche 32 umfassen. Dadurch können unkontrollierte und zufällige Intensitätsmaxima der Gesamtlichtverteilung, insbesondere oberhalb einer Helldunkelgrenze, vermieden und die gesetzlichen Anforderungen an die Gesamtlichtverteilung besser erfüllt werden.

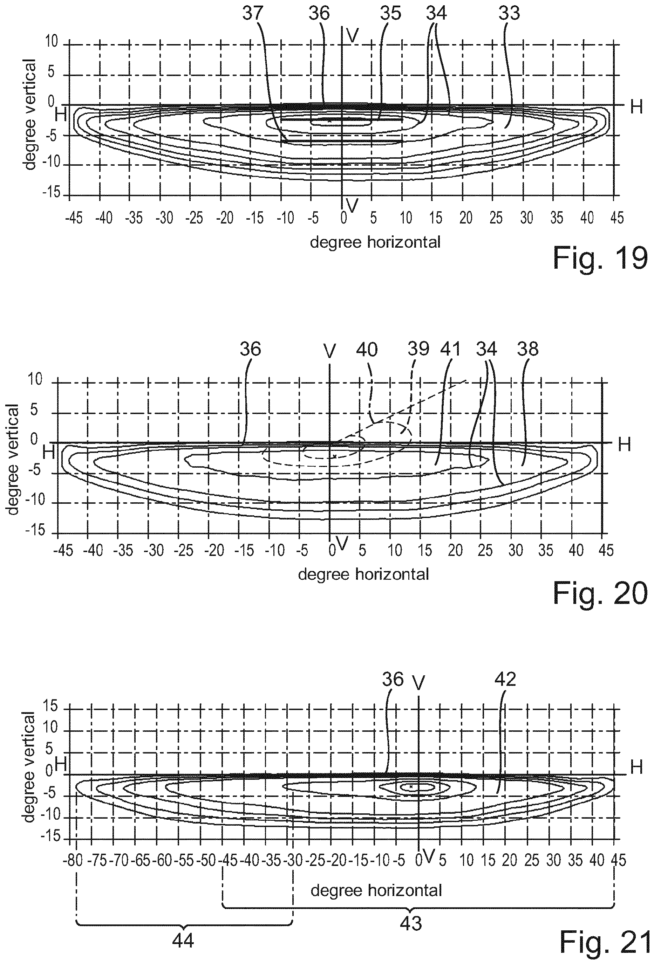

In den Figuren 19 bis 21 sind verschiedene Ausführungsformen von resultierenden Gesamtlichtverteilungen der erfindungsgemäßen Beleuchtungseinrichtung 10 dargestellt, wie sie bei aktiver Beleuchtungseinrichtung 10 auf einem in einem Abstand von bspw. 25m zu dem Fahrzeug 1 bzw. der Beleuchtungseinrichtung 10 angeordneten Messschirm abgebildet werden. Die unterschiedlichen Lichtverteilungen gemäß der Figuren 19 bis 21 können durch geschickte Kombination, Anordnung und Ausrichtung mehrerer Lichtmodule 24 gebildet werden. So zeigt beispielsweise Figur 19 eine als Nebellichtverteilung 33 ausgebildete Gesamtlichtverteilung. In der dargestellten Lichtverteilung 33 sind Bereiche gleicher Intensität durch sog. IsoluxLinien 34 gekennzeichnet. Die Lichtverteilung 33 erfüllt die Anforderungen der ECE-Regelung 19 F3, die voraussichtlich Mitte 2011 in Kraft treten wird.

Insbesondere weist die Nebellichtverteilung 33 aus Figur 19 im Bereich einer in der ECE-Regelung als "Linie 6" und in der Figur 19 mit dem Bezugszeichen 35 bezeichneten Linie, die vertikal bei -2,5° und horizontal von -10° bis +10° verläuft, eine Intensität von mindestens 2.000 cd auf. Die Helldunkelgrenze 36 der Nebellichtverteilung 33 gemäß ECE-R. 19 F3 ist besonders scharf (großer Gradient am Übergang zwischen Hell und Dunkel) und verläuft bei -1° vertikal. Das bedeutet, dass die maximale Intensität der Lichtverteilung 33 bei der Linie 35 unterhalb der Helldunkelgrenze 36, insbesondere bereits 1,5° unterhalb der Helldunkelgrenze 36 vorliegen muss. Ferner weist die Nebellichtverteilung 33 aus Figur 19 im Bereich einer sogenannten "Linie 7" 37, die bei vertikal bei -6,0° und horizontal von -10° bis +10° verläuft, einen maximalen Intensitätswert von weniger als 50% des maximalen Intensitätswertes auf "Linie 6" 35 auf. Somit muss die Intensität der Lichtverteilung auf der vertikalen Achse W innerhalb von nur 3,5° (von -2,5° auf -6,0°) um mehr als 50% abnehmen.

Ferner weist die resultierende Nebellichtverteilung 33 an verschiedenen Messpunkten 1 bis 10 oberhalb der Helldunkelgrenze 36 in einem Bereich zwischen vertikal +20° und +60° sowie horizontal von -60° bis +60° sehr niedrige Intensitätswert (maximal 60 cd) auf, die bereits durch geringe unkontrollierte Reflexionen, die versehentlich von dem lichttechnischen System der Beleuchtungseinrichtung 10 in den Bereich oberhalb der Helldunkelgrenze 36 gelangen, überschritten werden können. Die erfindungsgemäße Beleuchtungseinrichtung 10 ist jedoch bewusst so ausgebildet worden, dass diese Maximalwerte in den Messpunkten 1 bis 10 auf besonders einfache Weise sicher und zuverlässig eingehalten werden können. Schließlich weist die resultierende Nebellichtverteilung 33 eine sehr scharfe Helldunkelgrenze 36 auf, die deshalb auch von den bisher für Nebelscheinwerferlicht üblichen -1,5° vertikal auf -1° vertikal angehoben wurde. All diese hohen Anforderungen an die Nebellichtverteilung 33 gemäß ECE-Regelung 19 F3 können durch die erfindungsgemäße Beleuchtungseinrichtung 10 einfach, sicher und zuverlässig erfüllt werden.

Neben einer Nebellichtverteilung 33 kann die erfindungsgemäße Beleuchtungseinrichtung 10 auch eine Basislichtverteilung 38 ohne ausgeprägtes Lichtmaximum im Zentrum erzeugen, wie sie bspw. in Figur 20 dargestellt ist. Auch die Lichtverteilung 38 weist Isoluxlinien 34 auf. Es ist deutlich zu erkennen, dass ein zentraler Bereich 41 mit der höchsten Intensität eine sehr große räumliche Erstreckung in vertikaler und horizontaler Richtung aufweist (vertikal von etwa -7° bis -1° und horizontal von etwa -25° bis +25°), dass es also an einem ausgeprägten Lichtmaximum fehlt. Die Basislichtverteilung 38 kann zum Beispiel Teil einer komplexen adaptiven Lichtverteilung sein. Wenn diese Basislichtverteilung 38 noch durch ein gestrichelt angedeutetes Teillichtbündel 39 eines SpotLichtmoduls überlagert wird ergibt sich eine herkömmliche Abblendlichtverteilung mit asymmetrischer oberer Helldunkelgrenze 40.

Schließlich kann durch die erfindungsgemäße Beleuchtungseinrichtung 10 aufgrund des modularen Aufbaus aus mehreren Lichtmodulen 24 mit jeweils separaten Lichtquellen 25 auch eine Nebellichtverteilung mit zusätzlicher Kurvenlichtfunktion realisiert werden. Eine entsprechende resultierende Gesamtlichtverteilung 42 ist beispielsweise in Figur 21 dargestellt. Zur Realisierung des kombinierten Nebellicht- und Kurvenlichtbündels 42 aus Figur 21 ist es beispielsweise denkbar, das lichttechnische System gemäß der Figuren 4 bis 6 seitlich durch zusätzliche Lichtmodule 24 zu ergänzen, die dem durch die übrigen Lichtmodule 24a bis 24e erzeugten Nebellichtbündel 43 ein einseitig seitlich ausgerichtetes Kurvenlichtbündel 44 überlagern.

## Patentansprüche

1. Kraftfahrzeugbeleuchtungseinrichtung (10) umfassend mehrere nebeneinander angeordnete Lichtmodule (24), wobei jedes Lichtmodul (24) mindestens eine Halbleiterlichtquelle (25), welche Licht in eine Hauptabstrahlrichtung (28) aussendet, und mindestens eine, der mindestens einen Halbleiterlichtquelle (25) funktional zugeordnete Reflexionsfläche (26) aufweist, die derart schräg zu der Hauptabstrahlrichtung (28) der mindestens einen Lichtquelle (25) ausgerichtet ist, dass ein Großteil des von der mindestens einen Halbleiterlichtquelle (25) ausgesandten Lichts auf die mindestens eine Reflexionsfläche (26) trifft und dass das an der mindestens einen Reflexionsfläche (26) reflektierte Licht eine Hauptaustrittsrichtung (12) aufweist, die in einem Winkel zwischen 60° und 90° zu der Hauptabstrahlrichtung (28) des von der mindestens einen Halbleiterlichtquelle (25) ausgesandten Lichts verläuft, wobei jedes der Lichtmodule (24) eine Teillichtverteilung erzeugt, wobei alle Teillichtverteilungen unterhalb einer geraden, horizontalen Helldunkelgrenze liegen und sich eine Gesamtlichtverteilung der Beleuchtungseinrichtung (10) durch eine Überlagerung der verschiedenen Teillichtverteilungen ergibt, **dadurch gekennzeichnet, dass** die Lichtmodule (24) der Beleuchtungseinrichtung (10) entlang einer Achse nebeneinander angeordnet sind, wobei die Lichtmodule (24) bezüglich einer senkrecht zu der Achse verlaufenden Symmetrieebene symmetrisch angeordnet und/oder ausgebildet sind und dass die Beleuchtungseinrichtung (10) eine ungerade Anzahl größer eins an Lichtmodulen (24) aufweist, wobei die Lichtmodule (24) der Beleuchtungseinrichtung (10) entlang einer Achse nebeneinander angeordnet sind und ein zentrales Lichtmodul (24c) eine in ihren Abmessungen gegenüber der Gesamtlichtverteilung beschränkte Teillichtverteilung mit der höchsten maximalen Intensität aller Teillichtverteilungen erzeugt.

2. Beleuchtungseinrichtung (10) nach Anspruch 1, **dadurch gekennzeichnet, dass** die zumindest einem der Lichtmodule (24) zugeordnete mindestens eine Halbleiterlichtquelle (25) ausgehend von einer in etwa horizontalen Anordnung um eine im Wesentlichen horizontal und im Wesentlichen senkrecht zu der Hauptaustrittsrichtung (12) des reflektierten Lichts verlaufende Achse zu der Reflexionsfläche (26) des Lichtmoduls (24) hin verkippt ist, so dass die Hauptabstrahlrichtung (28) der Lichtquelle (25) weiter oberhalb auf die Reflexionsfläche (26) trifft als wenn die Lichtquelle (25) horizontal angeordnet wäre.

3. Beleuchtungseinrichtung (10) nach Anspruch 1 oder 2, **dadurch gekennzeichnet, dass** die Teillichtverteilung mit der höchsten maximalen Intensität aller Teillichtverteilungen zumindest in einem zentralen Bereich der Gesamtlichtverteilung den Verlauf der Helldunkelgrenze definiert.

4. Beleuchtungseinrichtung (10) nach einem der Ansprüche 1 bis 3, **dadurch gekennzeichnet, dass** die Lichtmodule (24) der Beleuchtungseinrichtung (10) entlang einer Achse nebeneinander angeordnet sind, wobei mindestens ein äußeres Lichtmodul (24a; 24e) der entlang der Achse angeordneten Lichtmodule (24) eine in ihren Abmessungen der Gesamtlichtverteilung entsprechende Teillichtverteilung mit der geringsten maximalen Intensität aller Teillichtverteilungen erzeugt.

5. Beleuchtungseinrichtung (10) nach einem der Ansprüche 1 bis 4, **dadurch gekennzeichnet, dass** die Reflexionsflächen (26) benachbarter Lichtmodule (24) unterschiedlich ausgebildet sind.

6. Beleuchtungseinrichtung (10) nach einem der Ansprüche 1 bis 5, **dadurch gekennzeichnet, dass** die Lichtmodule (24) der Beleuchtungseinrichtung (10) entlang einer Achse nebeneinander angeordnet sind, wobei die oder jede Reflexionsfläche (26) eines Lichtmoduls (24) relativ zu der mindestens einen Halbleiterlichtquelle (25) des Lichtmoduls (24) und/oder die oder jede Halbleiterlichtquelle (25) eines Lichtmoduls (24) relativ zu der mindestens einen Reflexionsfläche (26) des Lichtmoduls (24) parallel zu der Hauptaustrittsrichtung (12) des reflektierten Lichts bewegbar und in einer bestimmten Relativposition festlegbar ist.

7. Beleuchtungseinrichtung (10) nach einem der Ansprüche 1 bis 6, **dadurch gekennzeichnet, dass** mindestens eines der Lichtmodule (24) der Beleuchtungseinrichtung (10) um eine im Wesentlichen vertikal verlaufende Drehachse relativ zu einem benachbarten Lichtmodul (24) drehbar und in einer bestimmten Drehposition festlegbar ist, so dass die Hauptaustrittsrichtungen des gedrehten Lichtmoduls (24) und des benachbarten Lichtmoduls (24) in einer horizontalen Ebene betrachtet schräg zueinander verlaufen.

8. Beleuchtungseinrichtung (10) nach einem der Ansprüche 1 bis 7, **dadurch gekennzeichnet, dass** Übergangsbereiche (32) der Reflexionsflächen (26) zwischen benachbarten Lichtmodulen (24) in Ebenen verlaufen, die parallel zu einer durch die Hauptabstrahlrichtungen (28) der Halbleiterlichtquellen (25) und die Hauptaustrittsrichtungen (12) des reflektierten Lichts aus dem Lichtmodul (24) aufgespannten Ebenen sind.

9. Beleuchtungseinrichtung (10) nach Anspruch 8, **dadurch gekennzeichnet, dass** die Übergangsbereiche (32) der Reflexionsflächen (26) mit einer Streustruktur versehen sind.

10. Beleuchtungseinrichtung (10) nach einem der Ansprüche 1 bis 9, **dadurch gekennzeichnet, dass** mindestens eines der Lichtmodule (24) zwei in einem Winkel schräg zueinander stehende Reflexionsflächen (26a', 26a"; 26b', 26b"; 26c', 26c"; 26d', 26d"; 26e', 26e") aufweist, wobei entlang eines Übergangs zwischen den Reflexionsflächen (26a', 26a"; 26b', 26b"; 26c', 26c"; 26d', 26d"; 26e', 26e") des Lichtmoduls (24) ein definierter Spalt (31) ausgebildet ist.

11. Kraftfahrzeugscheinwerfer umfassend ein Gehäuse und mindestens ein darin angeordnetes Lichtmodul zur Erzeugung einer Scheinwerferfunktion, **dadurch gekennzeichnet, dass** zusätzlich zu dem Lichtmodul zur Erzeugung einer Scheinwerferfunktion in dem Gehäuse eine Beleuchtungseinrichtung nach einem der Ansprüche 1 bis 10 zur Erzeugung einer Nebellichtverteilung angeordnet ist.

## Claims

1. Motor vehicle lighting device (10) comprising a plurality of light modules (24) arranged side by side, each light module (24) comprising at least one semiconductor light source (25), which emits light in a main emission direction (28), and at least one reflective surface (26), which is functionally associated with at least one semiconductor light source (25) and is oriented obliquely with respect to the main emission direction (28) of the at least one light source (25) such that a majority of the light emitted by the at least one semiconductor light source (25) strikes the at least one reflective surface (26) and such that the light reflected on the at least one reflective surface (26) has a main emergence direction (12) that extends at an angle of between 60° and 90° with respect to the main emission direction (28) of the light emitted by the at least one semiconductor light source (25), each of the light modules (24) producing a partial light distribution, all the partial light distributions being below a straight, horizontal light/dark cut-off and an overall light distribution of the lighting device (10) resulting from superimposing the various partial light distributions, **characterised in that** the light modules (24) of the lighting device (10) are arranged side by side along an axis, the light modules (24) being arranged and/or designed symmetrically with respect to a plane of symmetry extending perpendicularly to the axis, and **in that** the lighting device (10) has an uneven number of light modules (24) that is greater than one, the light modules (24) of the lighting device (10) being arranged side by side along an axis, and a central light module (24c) producing a partial light distribution, the dimensions of which are limited in relation to the overall light distribution and which has the highest maximum intensity of all the partial light distributions.

2. Lighting device (10) according to claim 1, **characterised in that**, starting from an approximately horizontal arrangement around an axis extending substantially horizontally and substantially perpendicularly to the main emergence direction (12) of the reflected light, the at least one semiconductor light source (25) associated with at least one of the light modules (24) is tilted towards the reflective surface (26) of the light module (24), such that the main emission direction (28) of the light source (25) strikes the reflective surface (26) further up than if the light source (25) were arranged horizontally.

3. Lighting device (10) according to either claim 1 or claim 2, **characterised in that** the partial light distribution having the highest maximum intensity of all the partial light distributions defines, at least in a central region of the overall light distribution, the profile of the light/dark cut-off.

4. Lighting device (10) according to any of claims 1 to 3, **characterised in that** the light modules (24) of the lighting device (10) are arranged side by side along an axis, at least one outer light module (24a; 24e) of the light modules (24) arranged along the axis producing a partial light distribution, the dimensions of which correspond to the overall light distribution and which has the lowest maximum intensity of all the partial light distributions.

5. Lighting device (10) according to any of claims 1 to 4, **characterised in that** the reflective surfaces (26) of adjacent light modules (24) are designed differently.

6. Lighting device (10) according to any of claims 1 to 5, **characterised in that** the light modules (24) of the lighting device (10) are arranged side by side along an axis, it being possible to move the or each reflective surface (26) of a light module (24) relative to the at least one semiconductor light source (25) of the light module (24), and/or the or each semiconductor light source (25) of a light module (24) relative to the at least one reflective surface (26) of the light module (24), in parallel with the main emergence direction (12) of the reflected light, and to fix said reflective surface and/or said semiconductor light source in a particular relative position.

7. Lighting device (10) according to any of claims 1 to 6, **characterised in that** at least one of the light modules (24) of the lighting device (10) can be rotated about a rotational axis, which extends substantially vertically, relative to an adjacent light module (24) and can be fixed in a particular rotational position, such that the main emergence directions of the rotated light module (24) and of the adjacent light module (24) extend obliquely with respect to one another when viewed in a horizontal plane.

8. Lighting device (10) according to any of claims 1 to 7, **characterised in that** transition regions (32) of the reflective surfaces (26) between adjacent light modules (24) extend in planes which are parallel to a plane spanned by the main emission directions (28) of the semiconductor light sources (25) and the main emergence directions (12) of the reflected light from the light module (24).

9. Lighting device (10) according to claim 8, **characterised in that** the transition regions (32) of the reflective surfaces (26) are provided with a scattering structure.

10. Lighting device (10) according to any of claims 1 to 9, **characterised in that** at least one of the light modules (24) comprises two reflective surfaces (26a', 26a"; 26b', 26b", 26c', 26c"; 26d', 26d"; 26e', 26e") that are oblique with respect to one another at an angle, a defined gap (31) being formed along a transition between the reflective surfaces (26a', 26a"; 26b', 26b", 26c', 26c"; 26d', 26d"; 26e', 26e") of the light module (24).

11. Motor vehicle headlamp comprising a housing and at least one light module, arranged therein, for producing a headlamp function, **characterised in that**, in addition to the light module for producing a headlamp function, a lighting device according to any of claims 1 to 10 for producing a fog light distribution is arranged in the housing.

## Revendications

1. Dispositif d'éclairage de véhicule automobile (10) comprenant plusieurs modules lumineux (24) disposés les uns à côté des autres, dans lequel chaque module lumineux (24) présente au moins une source de lumière à semi-conducteur (25) qui envoie de la lumière dans une direction d'émission principale (28), et au moins une surface réfléchissante (26) associée de manière fonctionnelle à la source de lumière à semi-conducteur (25), au moins au nombre de une, laquelle est orientée en oblique par rapport à la direction d'émission principale (28) de la source de lumière (25), au moins au nombre de une, de manière telle qu'une grande partie de la lumière envoyée par la source de lumière à semi-conducteur (25), au moins au nombre de une, arrive sur la surface réfléchissante (26), au moins au nombre de une, et que la lumière réfléchie au niveau de la surface réfléchissante (26), au moins au nombre de une, présente une direction de sortie principale (12), qui s'étend selon un angle compris entre 60° et 90° par rapport à la direction d'émission principale (28) de la lumière envoyée par la source de lumière à semi-conducteur (25), au moins au nombre de une, chacun des modules lumineux (24) générant une répartition de lumière partielle, toutes les répartitions de lumière partielles se situant sous une limite obscurité/clarté droite, horizontale, et une répartition de lumière globale du dispositif d'éclairage (10) résultant d'une superposition des différentes répartitions de lumière partielles, **caractérisé en ce que** les modules lumineux (24) du dispositif d'éclairage (10) sont disposés les uns à côté des autres le long d'un axe, les modules lumineux (24) étant disposés et/ou réalisés de manière symétrique par rapport à un plan de symétrie s'étendant perpendiculairement à l'axe, et **en ce que** le dispositif d'éclairage (10) présente un nombre impair, supérieur à un, de modules lumineux (24), les modules lumineux (24) du dispositif d'éclairage (10) étant disposés les uns à côté des autres le long d'un axe et un module lumineux (24c) central générant une répartition de lumière partielle limitée dans ses dimensions par rapport à la répartition de lumière globale, présentant l'intensité maximale la plus élevée de toutes les répartitions de lumière partielles.

2. Dispositif d'éclairage (10) selon la revendication 1, **caractérisé en ce que** la source de lumière à semi-conducteur (25), au moins au nombre de une, associée aux modules lumineux (24) est basculée, en partant d'une disposition approximativement horizontale, autour d'un axe s'étendant sensiblement de manière horizontale et sensiblement de manière perpendiculaire par rapport à la direction de sortie principale (12) de la lumière réfléchie, en direction de la surface réfléchissante (26) du module lumineux (24) de sorte que la direction d'émission principale (28) de la source de lumière (25) arrive sur la surface réfléchissante (26) bien plus au-dessus que si la source de lumière (25) était disposée de manière horizontale.

3. Dispositif d'éclairage (10) selon la revendication 1 ou 2, **caractérisé en ce que** la répartition de lumière partielle présentant l'intensité maximale la plus élevée de toutes les répartitions de lumière partielles définit, au moins dans une zone centrale de la répartition de lumière globale, le profil de la limite obscurité/clarté.

4. Dispositif d'éclairage (10) selon l'une des revendications 1 à 3, **caractérisé en ce que** les modules lumineux (24) du dispositif d'éclairage (10) sont disposés les uns à côté des autres le long d'un axe, au moins un module lumineux extérieur (24a ; 24e) des modules lumineux (24) disposés le long de l'axe générant une répartition de lumière partielle correspondant, dans ses dimensions, à la répartition de lumière globale, présentant l'intensité maximale la plus faible de toutes les répartitions de lumière partielles.

5. Dispositif d'éclairage (10) selon l'une des revendications 1 à 4, **caractérisé en ce que** les surfaces réfléchissantes (26) de modules lumineux (24) adjacents sont réalisées de manière différente.

6. Dispositif d'éclairage (10) selon l'une des revendications 1 à 5, **caractérisé en ce que** les modules lumineux (24) du dispositif d'éclairage (10) sont disposés les uns à côté des autres le long d'un axe, la ou chaque surface réfléchissante (26) d'un module lumineux (24) par rapport à la source de lumière à semi-conducteur (25), au moins au nombre de une, du module lumineux (24) et/ou la ou chaque source de lumière à semi-conducteur (25) d'un module lumineux (24) par rapport à la surface réfléchissante (26), au moins au nombre de une, du module lumineux (24) pouvant être déplacée(s) parallèlement à la direction de sortie principale (12) de la lumière réfléchie et pouvant être fixée(s) dans une position relative déterminée.

7. Dispositif d'éclairage (10) selon l'une quelconque des revendications 1 à 6, **caractérisé en ce qu'**au moins un des modules lumineux (24) du dispositif d'éclairage (10) peut tourner par rapport à un module lumineux (24) adjacent autour d'un axe de rotation s'étendant sensiblement verticalement et peut être fixé dans une position de rotation déterminée de sorte que les directions de sortie principales du module lumineux (24) tourné et du module lumineux (24) adjacent s'étendent, vues dans un plan horizontal, de manière oblique les unes par rapport aux autres.

8. Dispositif d'éclairage (10) selon l'une des revendications 1 à 7, **caractérisé en ce que** des zones de transition (32) des surfaces réfléchissantes (26) s'étendent entre des modules lumineux (24) adjacents dans des plans qui sont parallèles à un plan formé par les directions d'émission principales (28) des sources de lumière à semi-conducteur (25) et les directions de sortie principales (12) de la lumière réfléchie provenant du module lumineux (24).

9. Dispositif d'éclairage (10) selon la revendication 8, **caractérisé en ce que** les zones de transition (32) des surfaces réfléchissantes (26) sont pourvues d'une structure de dispersion.

10. Dispositif d'éclairage (10) selon l'une des revendications 1 à 9, **caractérisé en ce qu'**au moins un des modules lumineux (24) présente deux surfaces réfléchissantes (26a', 26a" ; 26b', 26b" ; 26c', 26c" ; 26d', 26d" ; 26e', 26e") en oblique l'une par rapport à l'autre selon un angle, une fente (31) définie étant réalisée le long d'une transition entre les surfaces réfléchissantes (26a', 26a" ; 26b', 26b" ; 26c', 26c" ; 26d', 26d" ; 26e', 26e") du module lumineux (24).

11. Phare de véhicule automobile comprenant un boîtier et au moins un module lumineux disposé dans ce dernier et permettant de générer une fonction de phare, **caractérisé en ce qu'**en plus du module lumineux permettant de générer une fonction de phare, un dispositif d'éclairage selon l'une des revendications 1 à 10 étant disposé dans le boîtier pour générer une répartition de lumière antibrouillard.
